# EUROPÄISCHE PATENTANMELDUNG

(11) **EP 1 035 092 A2**
(43) Veröffentlichungstag der Anmeldung: **13.09.2000**
(21) Anmeldenummer: 00103776.1
(22) Anmeldetag: 23.02.2000
(51) Int. Cl.: C05F 9/00, C05G 3/00, C05G 3/04, B09B 3/00, C08B 37/00, C12F 3/00

(54) **Mischung aus einem pflanzlichen Rückstand und einem wasserabsorbierenden Polymerisat**

(30) Priorität: 08.03.1999 DE 19910267
(71) Anmelder: STOCKHAUSEN GmbH & CO. KG, 47805 Krefeld (DE)
(72) Erfinder: Brüggemann, Helmut, Dr., 47447 Moers (DE); Hübner, Wolfgang, Dr., 47906 Kempen (DE)
(74) Vertreter: Wolff, Felix, Dr.

(57) **Zusammenfassung**

Die Erfindung betrifft eine lager- und transportfähige und gegebenenfalls verwertbare Mischung enthaltend pflanzliche Rückstände und mindestens ein Wasser und/oder wässrige Flüssigkeiten absorbierendes Polymerisat. Die Erfindung betrifft ferner ein Verfahren zur Herstellung der Mischung und deren Verwendung.

## Beschreibung

Die Erfindung betrifft eine lager- und transportfähige und gegebenenfalls verwertbare Mischung enthaltend pflanzliche Rückstände und mindestens ein Wasser und/oder wässrige Flüssigkeiten absorbierendes Polymerisat. Die Erfindung betrifft ferner ein Verfahren zur Herstellung der Mischung und deren Verwendung.

Bei der Verwertung von pflanzlichem Material, z.B. zur Herstellung von pflanzlichen Ölen, Fruchtsaften, Fruchtspeisen, Aromastoffen, Bier und Wein, fallen in großer Menge pflanzliche Rückstände an, die sich hinsichtlich ihrer weiteren Verwendung beziehungsweise bei der Entsorgung als problematisch erweisen. Diese Entsorgung wird insbesondere dadurch erschwert, daß die Verarbeitung des pflanzlichen Materials teilweise unter Zusatz von Wasser erfolgt, so daß die weitgehend aufgeschlossenen, pflanzlichen Rückstände als wässriges Gemisch vorliegen, das aufgrund seines inhonmogenen fest-flüssig Zustandes und des oftmals beginnenden biologischen Abbaus nur schwierig zu handhaben; d.h. zu transportieren, zu lagern oder anderweitig zu verarbeiten ist.

Solche Gemische fallen beispielsweise bei der Gewinnung von Palmöl oder Olivenöl an. Über die Eigenschaften von Olivenrückständen, deren bisher bekannte Nutzungsmöglichkeiten und Deponierung wird von M. Hamdi in Bioprocess Engineering 8 (1993) 209 ― 214 sowie von Angel Garcia-Ortiz Rodrigez et al. in Com. I + D Agroalimentaria 17/95 berichtet. Sowohl wegen des suspensionsartigen Zustands als auch wegen des rasch einsetzenden gährungsartigen biologischen Abbaus sind diese Rückstände nur kostenaufwendig und unter starker Belastung der Umwelt zu transportieren bzw. zu lagern.

Die Möglichkeit, diese Rückstände als Düngemittel zu nutzen, ist wegen der sich beim biologischen Abbau ausbildenden phytotoxischen Effekte nach J. Cegarra et al., Internat. biodeterioration & biodegradation (1996) 193 ― 203 nur für frische Materialien oder in Abmischung mit anderen Pflanzenabfällen gegeben.

Dieselben oder ähnliche Probleme treten auch bei den pflanzlichen Rückständen aus der Herstellung von z.B. Fruchtsäften, Fruchtspeisen, Aromastoffen und Bier auf.

Es bestand daher die Aufgabe, pflanzliche Rückstande lager- und transportfähig und gegebenenfalls verwertbar zu machen.

Die Aufgabe wird erfindungsgemäß durch die Bereitstellung einer lager- und transportfähigen und gegebenenfalls verwertbaren Mischung gelöst, die pflanzliche Rückstände, mindestens ein Wasser und/oder wässrige Flüssigkeiten absorbierendes Polymerisat und gegebenenfalls Wasser enthält.

Transportfähig im Sinne der Erfindung bedeutet, daß der erfindungsgemäßen Mischung trotz der bei einem Transport auftretenden Erschütterungen keine bzw. nahezu keine Flüssigkeit austritt. Lagerfähig in Sinne der Erfindung bedeutet, daß sich die erfindungsgemäße Mischung über einen Zeitraum von mehreren Wochen nicht oder nur unwesentlich biologisch zersetzt.

Die erfindungsgemäße Mischung kann gegebenenfalls Wasser enthalten. Dieses Wasser kann Prozeßwasser, das dem pflanzlichen Material zu dessen Verarbeitung zugegeben wurde, Zellflüssigkeit, die aus den Zellen ausgetreten ist oder deren Mischung sein.

Die pflanzlichen Rückstände sind gegebenenfalls zerkleinerte Wurzeln, Stiele, Blüten, Blätter und/oder vorzugsweise Früchte von Pflanzen, insbesondere pflanzliche Materialien, denen vorzugsweise mindestens ein Inhaltsstoff entzogen worden ist. Diese Inhaltsstoffe können beliebige Inhaltsstoffe des pflanzlichen Materials sein. Vorzugsweise sind diese Inhaltsstoffe jedoch pflanzliche Öle, Fette, Fruchtsäfte Mono-, Oligo- und/oder Polysaccharide und/oder Duft- bzw. Geschmacksstoffe.

Die pflanzlichen Rückstände können aber auch pflanzliche Abfälle sein, die z.B. bei der industriellen Verarbeitung von Feldfrüchten, wie Kartoffeln, Zuckerrüben, Gemüse sowie Obst, beispielsweise Äpfeln, anfallen. Mit der erfindungsgemäßen Mischung lassen sich insbesondere lager- und transportfähige und ggf. verwertbare Materialien aus Rückständen bei der Kartoffelherstellung erhalten. Diese Rückstände enthalten unter anderem insbesondere Kartoffelstärke-Prozessabwasser.

Des Weiteren können die pflanzlichen Rückstände auch pflanzliches Material sein, bei dem der Fäulnisprozeß bereits eingesetzt hat.

Erfindungsgemäß enthält die erfindungsgemäße Mischung neben den pflanzlichen Rückständen mindestens ein Wasser und/oder wässrige Flüssigkeiten wasserabsorbierendes Polymerisat. Durch den Zusatz dieser Polymerisate zu den pflanzlichen Rückständen und dem gegebenfalls vorhandenen Wasser entsteht überraschender Weise eine teigähnliche schnelltrocknende, feste Masse.

Weiterhin ist überraschend, daß ein biologischer Abbau der pflanzlichen Rückstände nach Zugabe des Polymerisates nicht einsetzt oder zwischenzeitlich unterbrochen wird, so daß die Belastung der Umwelt durch schädliche Abbauprodukte und insbesondere belästigende Gerüche nicht erfolgt oder stark vermindert ist und insbesondere die weitere Verwendung dieser erfindungsgemäßen Mischung nicht eingeschränkt ist.

Wasser und wässrige Flüssigkeiten absorbierende Polymerisate im Sinne der Erfindung sind alle Polymerisate, die als Superabsorber bezeichnet werden und zuletzt von F.L. Buchholz und A.T. Graham bei J. Wiley & Sons, N.Y., 1998, S. 7 bis 17, beschrieben werden.

Vorzugsweise sind die Polymerisate, aus
a. 55 ― 99,9 Gew.% mindestens eines ethylenisch ungesättigten, polymerisierbaren, Säuregruppen enthaltenden Monomeren, das zu mindestens 25 Mol% als Salz vorliegt,
b. 0 ― 40 Gew.% eines weiteren, ethylenisch ungesättigten, mit dem Monomeren nach a) copolymerisierbaren Monomeren,
c. 0,01 ― 5,0 Gew.% mindestens eines Vernetzungsmittels und
d. 0 ― 30 Gew.% eines wasserlöslichen Polymeren,
aufgebaut, wobei die Summe der Komponenten a) ― d) immer 100 Gew.% ergibt.

Die Polymerisate können weiterhin durch nachträgliche Oberflächenbehandlung, beispielsweise nach dem in DE 40 20 780 C1 angegebenen Verfahren, zusätzlich vernetzt sein. Die DE 40 20 780 C1 wird hiermit als Referenz eingeführt und gilt somit als Teil der Offenbarung.

Ebenfalls bevorzugt sind Polymerisate, die nach den in DE 44 18 818 C2 und DE 42 06 856 C2 angegebenen Verfahren hergestellt werden. Diese Polymerisate sind durch ein hohes Aufnahmevermögen für Wasser und/oder wässrige Flüssigkeiten und durch eine gleichmäßige und hohe Aufnahmegeschwindigkeit und Verteilung, auch unter Druckbelastung, gekennzeichnet und bekannt. Die DE 44 18 818 C2 und DE 42 06 856 C2 werden hiermit als Referenz eingeführt und gelten somit als Teil der Offenbarung.

Erfindungsgemäß können Gemische verschiedener, Wasser und/oder wässrige Flüssigkeiten absorbierender Polymerisate eingesetzt werden.

Bevorzugt enhält die erfindungsgemäße Mischung zusätzlich natürliche und/oder modifizierte Polysaccharide. Solche natürlichen und/oder modifizierten Polysaccharide sind Cellulose, Stärke, Celluloseether, wie Carboxymethylcellulose, Methylcellulose, Methylhydroxyalkylcellulose, Hydroxyethylcellulose, Ethylcellulose, Ethylhydroxyethylcellulose, Hydroxypropylcellulose sowie Carboxymehtylhydroxyethylcellulose und/oder oxydierte, anionische Stärken und anionische Stärkeether.

Die erfindungsgemäße Mischung wird vorteilhafterweise hergestellt, indem die, gegebenenfalls zerkleinerten, pflanzlichen Rückstände und das gegebenenfalls vorhandene Wasser mit mindestens einem Wasser und/oder wässrige Flüssigkeiten absorbierenden Polymerisat versetzt werden. Dieses erfindungsgemäße Verfahren ist deshalb ebenfalls Gegenstand der vorliegenden Erfindung.

Vorzugsweise werden die Polymerisate als Pulver mit einer Kornverteilung im Bereich von 10 ― 10 000 µm, vorzugsweise im Bereich von 10 ― 5 000 µm und besonders bevorzugt im Bereich von 10 ― 3 500 µm, insbesondere als Polymerfeinteile, und/oder als Wasser-in-Öl-Dispersion zugesetzt. Besonders geeignet sind auch Polymerisate mit einer Körnung kleiner als 200 µm, ganz besonders geeignet Polymerisat-Teilchen mit einer Kornverteilung zwischen 10 und 150 µm.

Die Zugabe des Polymerisats erfolgt in einer solchen Menge, daß die erfindungsgemäße Mischung als feste bzw. schnittfeste Masse vorliegt. Ebenfalls bevorzugt erfolgt die Zugabe des Polymerisats in einer Menge, daß die erfindungsgemäße Mischung nach max. 15 Minuten als pastöse, schnell trocknende Masse, besonders bevorzugt jedoch als krümeliger Feststoff vorliegt. Vorzugsweise erfolgt die Zugabe des Polymerisates in einer Menge von 0,1 ― 10,0 Gew.%, besonders bevorzugt 0,2 ― 5,0 Gew.% und ganz besonders bevorzugt im Bereich von 0,25 ― 2,5 Gew.%, bezogen auf das Gemisch aus pflanzlichem Rückstand und gegebenenfalls vorhandenem Wasser.

Sofern das pflanzliche Material zerkleinert wird, erfolgt der Zusatz des Polymerisats vorzugsweise während dieser Zerkleinerung. Ebenfalls bevorzugt wird das Polymerisat vor, während und/oder nach der Abtrennung eines oder mehrerer Inhaltsstoffe aus dem pflanzlichen Material zudosiert. Die Zugabe kann auch in Teilmengen und an verschiedenen Orten des Herstellungsverfahrens erfolgen.

Vorteilhaft wird das Polymerisat zu den pflanzlichen Rückständen dosiert, wenn diese z.B. mit einer Schnecke aus der jeweiligen Anlage z.B. in einen Container oder Lastkraftwagen gefördert werden.

Die erfindungsgemäße Mischung kann als Bodenverbesserungs- und/oder Düngemittel und/oder als Komponente im Düngemittel sowie als künstliches Bodensubstrat zur Pflanzenzucht eingesetzt werden, da sie zum Wachstum der Pflanzen dienliche Stoffe, wie z. B. Kaliumsalze und Phosphate in beträchtlicher Menge enthält.

Bei der Herstellung der erfindungsgemäßen Mischungen aus den Prozessabwässern der Stärkegewinnung aus Kartoffeln werden zum einen bei deren Verwertung umweltbelastende Geruchsbelästigungen vermieden und zum anderen erfolgt bei der Verwendung der Mischung als Düngemittel oder Düngemittelkomponente eine verzögerte Abgabe der kalium- und stickstoffhaltigen Verbindungen, so daß die Nachteile der direkten, düngenden Verregnung vermieden werden.

Die erfindungsgemäße Mischung kann außerdem problemlos deponiert oder verbrannt werden.

Die erfindungsgemäße Mischung ist weiterhin als Zwischenprodukt zur Gewinnung anderer Inhaltsstoffe oder Pflanzenbestandteile, beispielsweise durch Extraktion mit organischen, wassermischbaren und/oder wasserunlöslichen Lösungsmitteln, wie n- und/oder iso-Alkanole, wie Methanol, Ethanol und Isopropylalkohol, flüssige n- und/oder iso-Alkane und aromatische Kohlenwasserstoffe, wie n-Hexan, Cyclohexan oder Benzol, oder durch Wasserdampfdestillation geeignet. Solche Inhaltsstoffe sind beispielsweise phenolische Verbindungen, wie Tyrosol, Hydroxytyrosol, Oleoeuropein, Kaffeesäure, Vanillinsäure, Syringasäure, p-Cumarin, o-Cumarin, Protocatechusäure, p-Hydroxybenzoesäure, Homovanillinsäure.

Weiterhin dient die erfindungsgemäße Mischung als Rohstoff zur Gewinnung anderer Produkte, wie Polysaccharide, beispielsweise zur Herstellung von Xanthan gum.

Die oben genannten Verwendungen sind deshalb ebenfalls Gegenstand der vorliegenden Erfindung.

Die Erfindung wird durch die nachfolgenden Beispiele erläutert, ohne den allgemeinen Erfindungsgedanken einzuschränken.

### Beispiel 1:

Bei der Herstellung von Olivenöl nach dem kontinuierlichen 2-Phasen-Prozeß werden nach Abtrennung der Ölphase in 200 g des anfallenden, frischen pflanzlichen Rückstands 10 g eines Wasser und/oder wässrige Flüssigkeiten absorbierendes Polymerisat mit der Bezeichnung Stockosorb 410 der Firma Stockhausen GmbH & Co. KG, D-47805 Krefeld in einem Becherglas mit einem Glasstab eingerührt. Nach 2 Minuten ist die erfindungsgemäße Mischung ein krümeliger Feststoff.

### Beispiel 2:

Der Feststoff gemäß Beispiel 1 wird 3 Wochen in einem Becherglas gelagert. Zum Vergleich wird 200 g des frischen, in gleicher Weise angefallenen pflanzlichen Rückstands, der eine Säurezahl von SZ = 2 aufweist, ebenfalls in einem offenen Becherglas bei Temperaturen im Bereich von 20 ― 25 °C gelagert. Im Vergleichsversuch kann eine Zersetzung des pflanzlichen Rückstandes durch den dafür charakteristischen Geruch nachgewiesen werden. Die Säurezahl des teilweise zersetzten Rückstands beträgt SZ = 6. Der mit Stocksorb behandelte Abfall zeigt diese Zersetzung nicht. Er trocknet vielmehr ab.

### Beispiel 3:

Bei der Herstellung von Olivenöl bei dem 3-Phasen-Prozeß werden nach Abtrennung der Ölphase in 200 g des flüssigen Rückstandes 10 g Stockosorb 410 in einem Becherglas mit einem Glasstab eingerührt. Nach 2 Minuten ist die erfindungsgemäße Mischung ein fester, krümeliger Stoff.

### Beispiel 4:

Beispiel 1 wird wiederholt, jedoch werden 20 g des gleichen Wasser und/oder wässrige Flüssigkeiten absorbierenden Polymerisates eingesetzt. Es entsteht eine feste, krümlige Masse. Die Masse zerfällt beim Ausschütten aus dem Becherglas in einzelne, separate Partikel.

### Beispiel 5:

Beispiel 1 wird wiederholt, jedoch wird statt des Olivenölrückstands ein pflanzlicher Rückstand aus der Palmkernöl―Herstellung verwendet. Es wird nach 2 min ein fester, krümeliger Rückstand erhalten.

### Beispiel 6:

Bei der Herstellung von Olivenöl wird der pflanzliche Rückstand mittels Schneckenförderung aus der Anlage heraus transportiert. Am Anfang der Transportschnecke wird ein Wasser und/oder wässrige Flüssigkeiten absorbierendes Polymerisat mit der Bezeichnung FavorPac der Firma Stockhausen GmbH & Co. KG in einer Menge von 1%, bezogen auf den pflanzlichen Rückstand aus der Olivenöl-Gewinnung, zudosiert. Die am Ende der Schnecke nach einer Verweilzeit von 1,5 min austretende erfindungsgemäße Mischung ist von deutlich festerer Konsistenz als die ursprünglichen pflanzlichen Rückstände aus der Olivenöl-Gewinnung. Beim weiteren Lagern entsteht nach 15 min eine teigartige, schnittfeste Masse, die schnell abtrocknet.

### Beispiel 7:

Beispiel 6 wird wiederholt, jedoch wird als Wasser und/oder wässrige Flüssigkeiten absorbierendes Polymerisat ein Polymerisat gemäß Beispiel 3 der DE 42 06 856 zugesetzt. Als Ergebnis wird eine feste Masse erhalten, die schnell abtrocknet. Das Ergebnis ist vergleichbar zum Beispiel 6.

### Beispiel 8:

Pflanzenerde wird mit den gelagerten Produkten aus Beispiel 2 so gemischt, daß der Anteil des Produktes 2 Gew.-% bezogen auf die Erde beträgt. Anschließend werden in diese Mischung Tomatenpflanzen gepflanzt. Die in die Erde eingearbeitete erfindungsgemäße Mischung beeinflußt das Wachstum der Tomatenpflanzen positiv. Ein paralell durchgeführer Vergleichsversuch mit den unbehandelten, gegorenen, pflanzlichen Rückständen aus der Olivenöl-Gewinnung zeigt ein vermindertes Wachstum der Pflanzen.

### Beispiel 9:

Die Produkte aus Beispiel 2 werden nach der beschriebenen Lagerung mit n-Hexan extrahiert. Eine Dünnschichtchromatographische Untersuchung zeigt, daß sich signifikant andere Extrakte bei der erfindungsgemäßen Mischung ergeben als bei dem unbehandelten pflanzlichen Rückständen aus der Olivenöl-Gewinnung.

### Beispiel 10:

In einem Hexler (Firma Moulinex) werden Oliven zerkleinert und anschließend mit 1.5 Gew.-% eines Wasser und/oder wässrige Flüssigkeiten absorbierendem Polymerisates mit der Bezeichnung Favor SXM 100 der Firma Stockhausen GmbH & Co. KG versetzt. Die ausgetretene wässrige Zellflüssigkeit wird von dem Polymerisat gebunden, das Olivenöl scheidet sich überwiegend an der Oberfläche des Absorbers ab.

### Beispiel 11:

200 g des pflanzlichen Rückstands aus einer Olivenöl-Gewinnung (vgl. Beispiel 1) wird mit 0.5 g eines Wasser und/oder wässrige Flüssigkeiten absorbierendem Polymerisat mit der Bezeichnung Favor 990 der Firma Stockhausen GmbH & Co. KG versetzt. Nach 30 Minuten ist die Konsistenz der erfindungsgemäßen Mischung deutlich verfestigt; selbst unter Druck läßt sich Wasser nur schwer auspressen.

### Beispiel 12

Zu einem nach der Extraktion anfallenden ca. 75 Gew.% Wasser enthaltenden, inhomogenen pflanzlichen Rückstand, bestehend aus einer wässrigen Phase und Olivenfrucht und ―kernanteilen, wurden 0,4 ― 0,5 Gew.%, bezogen auf den Rückstand, eines Wasser- und/oder wässrige Flüssigkeiten absorbierenden Polymerisats zugesetzt.

Als Wasser- und/oder wässrige Flüssigkeiten absorbierendes Polymerisat werden verschiedene Produkte mit den Bezeichnungen Stokosorb 400 F, Produkt T-5066 und Cabloc der Stockhausen GmbH & Co. KG verwendet. Nach 20 Minuten ist jeweils ein fester, gelartiger, krümeliger Stoff entstanden (Stufe I), der an der Luft bei Raumtemperatur 2 Tage getrocknet wird. Zu diesem getrockneten Rückstand wird erneut eine Menge des unbehandelten Rückstands so zugegeben, daß wiederum eine Mischung mit fester Konsistenz gebildet wird (Stufe II).

Die Zugabemengen der Polymerisate sind in der Tabelle 1 zusammengefaßt:

| Produkt | Stokosorb 400 F | Cabloc | Produkt T 5066 |
|---|---|---|---|
| | Zugabemenge in kg/t | | |
| Stufe I | 4,4 | 4,5 | 5,0 |
| Stufe II | 2,0 | 1,5 | 2,2 |

Der Polymerisatanteil in der Endmischung liegt im Bereich von 0,15 bis 0,22 Gew.%, bezogen auf die Mischung.

### Beispiel 13

Der in Beispiel 12 verwendete Rückstand wird mit einer überschüssigen Menge eines Wasser- und/oder wässrige Flüssigkeiten absorbierenden Polymerisats im Bereich von 0,75 bis 0,80 Gew.%, bezogen auf den Rückstand, versetzt (Stufe I). Ohne die Mischung zu trocknen, wird eine weitere Menge des Rückstand zugesetzt, wobei wiederum eine Mischung mit fester Konsistenz (Stufe II) gebildet wird.

Die Zugabemengen der Polymerisate sind in der Tabelle 2 zusammengefaßt:

| Produkt | Stokosorb 400 F | Cabloc | Produkt T 5066 |
|---|---|---|---|
| | Zugabemenge in kg/t | | |
| Stufe I | 7,5 | 7,5 | 8,0 |
| Stufe II | 2,5 | 3,3 | 4,4 |

Bei Polymerisatkonzentration im Bereich von 0,25 ― 0,44 Gew.%, bezogen auf die Mischung, wird eine gelformige, feste Konsistenz des Rückstandes erreicht.

### Beispiel 14

Zu 100 g der Rückstandssuspension des kontinuierlichen 2-Phasen Extraktionsprozesses werden 2 g des Wasser und/oder wässrige Flüssigkeiten absorbierenden Polymerisats Produkt T 5066 der Firma Stockhausen GmbH & Co.KG zugesetzt. Die Mischung wird mit Hexan extrahiert, wobei eine Ölabtrennung mit einer Ausbeute von 70 Gew.% erreicht wird.

### Beispiel 15:

200 g eines handelsüblichen Apfelmuses werden mit 20 g des Wasser und/oder wässrige Flüssigkeiten absorbierenden Polymers Stocksorb 410 K der Firma Stockhausen, D-47805 Krefeld in einem Becherglas mit einem Glasstab miteinander vermischt. Es entsteht eine feste krümelige Masse.

### Beispiel 16:

Die aus Beispiel 12 erhaltene Masse wird eine Woche bei Raumtemperatur (20°C, 60% relative Luftfeuchte) getrocknet. Der so erhaltene Feststoff wird in einem Beckerglas in 200 g der beschriebenen pflanzlichen Abfälle aus der Olivenöl-Gewinnung eingearbeitet. Es entsteht wiederum eine feste, krümelige Masse, die beim Ausschütten aus dem Becherglas zerfällt.

### Beispiel 17:

200 g einer Mischung aus Hopfen und Malz aus der Bierproduktion werden mit 20 g des Wasser und/oder wässrige Flüssigkeiten absorbierenden Polymerisats Stocksorb 410 K der Firma Stockhausen, D-47805 Krefeld in einem Becherglas vermischt. Es entsteht eine feste krümelige Masse, bei der auch nach drei Wochen keine Fäulnis zu beobachten ist.

### Beispiel 18:

200 g eines zerstampften Breis aus Kartoffeln werden mit 20 g Stokosorb 410 K in einem Becherglas mit einem Glasstab miteinander vermischt und es entsteht eine feste, krümelige Masse.

### Beispiel 19

Zu 100 g eines Prozeßabwassers aus der Stärkegewinnung von Kartoffeln werden 2,5 g Stokosorb 400 F zugefügt. Es bildet sich eine krümelige feste Masse, die als Düngemittel entsprechend Beispiel 8 verwendet wird und das Wachstum der Tomatenpflanzen positiv beeinflußt.

## Patentansprüche

1. Lager- und transportfähige gegebenenfalls verwertbare Mischung, enthaltend pflanzliche Rückstände, mindestens ein Wasser und/oder wässrige Flüssigkeiten absorbierendes Polymerisat und gegebenenfalls Wasser.

2. Mischung nach Anspruch 1, dadurch gekennzeichnet, daß die pflanzlichen Rückstände aus pflanzlichen Materialien erhalten worden sind, aus denen mindestens ein Inhaltsstoff abgetrennt worden ist.

3. Mischung nach Anspruch 1 oder 2, dadurch gekennzeichnet, daß das Polymerisat aus:
a. 55 ― 99,9 Gew.% mindestens eines ethylenisch ungesättigten, polymerisierbaren, Säuregruppen enthaltenden Monomeren, das zu mindestens 25 Mol% als Salz vorliegt,
b. 0 ― 40 Gew.% eines weiteren, ethylenisch ungesättigten, mit dem Monomeren nach a) copolymerisierbaren Monomeren,
c. 0,01 ― 5,0 Gew.% mindestens eines Vernetzungsmittels und
d. 0 ― 30 Gew.% eines wasserlöslichen Polymeren,
aufgebaut ist, wobei die Summe der Komponenten a) ― d) immer 100 Gew.% ergibt.

4. Mischung nach einem der Ansprüche 1 bis 3, dadurch gekennzeichnet, daß sie zusätzlich natürliche und/oder modifizierte Polysaccharide, vorzugsweise Cellulose, Stärke, Celluloseether, vorzugsweise Carboxymethylcellulose, Methylcellulose, Methylhydroxyalkylcellulose, Hydroxyethylcellulose, Ethylcellulose, Ethylhydroxyethylcellulose, Hydroxypropylcellulose sowie Carboxymethylhydroxyethylcellulose und/oder oxydierte, an ionische Stärke und/oder anionische Stärkeether enthält.

5. Mischung nach einem der Ansprüche 1-4, dadurch gekennzeichnet, daß die Pflanzenrückstände Wurzeln, Blätter, Stiele, Blüten und/oder Früchte sind.

6. Verfahren zur Herstellung lagerfähiger und/oder transportfähiger bzw. verwertbarer Mischung dadurch gekennzeichnet, daß ein pflanzlicher Rückstand und gegebenenfalls Wasser mit mindestens einem, Wasser und/oder wässrige Flüssigkeiten absorbierenden Polymerisat versetzt wird.

7. Verfahren nach Anspruch 6, dadurch gekennzeichnet, daß das pflanzliche Material zerkleinert und dann mindestens ein Inhaltsstoff abgetrennt wird.

8. Verfahren nach Anspruch 7, dadurch gekennzeichnet, daß der Zusatz des Polymerisats während der Zerkleinerung des pflanzlichen Materials, vor, während und/oder vorzugsweise nach der Abtrennung der Inhaltsstoffe erfolgt.

9. Verfahren nach einem der Ansprüche 6 bis 8 dadurch gekennzeichnet, daß das Polymerisat aus:
a. 55 ― 99,9 Gew.% mindestens eines ethylenisch ungesättigten, polymerisierbaren, Säuregruppen enthaltenden Monomeren, das zu mindestens 25 Mol% als Salz vorliegt,
b. 0 ― 40 Gew.% eines weiteren, ethylenisch ungesättigten, mit dem Monomeren nach a) copolymerisierbaren Monomeren,
c. 0,01 ― 5,0 Gew.% mindestens eines Vernetzungsmittels und
d. 0 ― 30 Gew.% eines wasserlöslichen Polymeren,
aufgebaut ist, wobei die Summe der Komponenten a) ― d) immer 100 Gew.% ergibt.

10. Verfahren nach einem Ansprüche 6 bis 9, dadurch gekennzeichnet, daß das Polymerisats in einer Menge von 0,1 ― 10,0 Gew.%, vorzugsweise von 0,2 ― 5,0 Gew.% und besonders bevorzugt von 0,25 ― 2,50 Gew.%, bezogen auf das Gemisch aus pflanzlichen Rückständen und gegebenenfalls Wasser zugegeben wird.

11. Verfahren nach einem der Ansprüche 6 bis 10, dadurch gekennzeichnet, daß das Polymerisat vorzugsweise als Pulver mit einer Kornverteilung im Bereich von 10 ― 10 000 µm, vorzugsweise im Bereich von 10 ― 5 000 µm und besonders bevorzugt im Bereich von 10 ― 3 500 µm und/oder als Wasser-in-Öl-Dispersion zugesetzt wird.

12. Verfahren nach einem der Ansprüche 6 bis 11 daß zusätzlich natürliche und/oder modifizierte Polysaccharide, vorzugsweise Cellulose, Stärke, Celluloseether, vorzugsweise Carboxymethylcellulose, Methylcellulose, Methylhydroxyalkylcellulose, Hydroxyethylcellulose, Ethylcellulose, Ethylhydroxyethylcellulose, Hydroxypropylcellulose sowie Carboxymethylhydroxyethylcellulose und/oder oxydierte, anionische Stärke und/oder anionische Stärkeether zugegeben werden.

13. Verwendung der Mischung nach einem der Ansprüche 1-5 als Deponiegut oder als Verbrennungzusatz.

14. Verwendung der Mischung nach einem der Ansprüche 1-5 als Bodenverbesserungs und/oder Düngemittel oder als Komponente im Düngemittel oder als Bodensubstrat.

15. Verwendung der Mischung nach einem der Ansprüchen 1-5 zur Gewinnung eines oder eines weiteren Inhaltsstoffes aus dem pflanzlichen Material, vorzugsweise durch Extration vorzugsweise mit organischen, wassermischbaren und/oder wasserunlöslichen Lösungsmitteln und/oder durch Wasserdampfdestillation.

16. Verwendung der Mischung nach einem der Ansprüchen 15 zur Gewinnung von polyphenolischen Verbindungen.

17. Verwendung der Mischung nach einem der Ansprüchen 1-5 als Rohstoff bei der Herstellung von Polysacchariden, vorzugsweise zur Herstellung von Xanthan gum.
